(19) Europäisches Patentamt / European Patent Office / Office européen des brevets

(11) **EP 3 054 292 B1**

(12) **EUROPEAN PATENT SPECIFICATION**

(45) Date of publication and mention
of the grant of the patent:
**22.02.2017 Bulletin 2017/08**

(51) Int Cl.:
*G01N 29/07* (2006.01)    *F16C 19/52* (2006.01)
*G01M 13/04* (2006.01)    *G01N 29/14* (2006.01)

(21) Application number: **15177528.5**

(22) Date of filing: **20.07.2015**

(54) **APPARATUS AND METHOD FOR DIAGNOSING THE ABNORMALITY OF A BEARING**

VORRICHTUNG UND VERFAHREN ZUR DIAGNOSTIZIERUNG EINER ANOMALIE EINES LAGERS

APPAREIL ET PROCÉDÉ PERMETTANT DE DIAGNOSTIQUER UNE ANOMALIE DANS UN PALIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.02.2015 JP 2015021900**

(43) Date of publication of application:
**10.08.2016 Bulletin 2016/32**

(73) Proprietor: **MITSUBISHI HEAVY INDUSTRIES,
LTD.
Tokyo 108-8215 (JP)**

(72) Inventor: **YOSHINAGA, Takahiro
Tokyo 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A2- 1 164 550       DE-A1- 10 136 438
DE-B3-102006 023 716**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to an apparatus and a method for diagnosing an abnormality of a bearing for supporting a rotation shaft rotatably.

BACKGROUND

Generally, a bearing disposed on a rotary machine is consistently in contact with a rotation shaft. Thus, continuing operation for a long time while there is an abnormality in the bearing may lead to a trouble of the entire rotary machine. In view of this, it is required to detect an abnormality of a bearing at an early stage.

As an abnormality diagnosis apparatus for a bearing, for instance, Patent Document 1 describes an apparatus which detects Acoustic Emission (AE) signals generated from a bearing while the rotary machine is being driven, and diagnoses the normality of a bearing based on the AE signal. An AE signal is a stress wave (elastic wave) generated from a bearing, and it is possible to diagnose whether a bearing is damaged by analyzing the AE signals.

Further, Patent Document 2 describes a configuration for detecting lubrication malfunction of a roller bearing based on an electrical characteristic value between an outer race and an inner race of the roller bearing.

Citation List

Patent Literature

Patent Document 1: JPH8-19141A

Patent Document 2: JP2003-176830A

SUMMARY

In general, when there is an abnormality in a bearing, the rotary machine is stopped to find out the section with the abnormality, and a work such as repair of the abnormal section and replacement of a component is performed. At this time, the appropriate measure may vary depending on the section where the abnormality has occurred, and thus it is required to determine the abnormality occurrence position quickly. Further, especially if the bearing is of a large type, it is difficult for workers to find the section where the abnormality has occurred, and it takes a long time and considerable efforts.

In this regard, while the diagnosing method described in Patent Document 1 or 2 can detect the occurrence of an abnormality in a bearing, there is no disclosure of a specific configuration for specifying the section where the abnormality has occurred.

In view of the above issues, an object of at least one embodiment of the present invention is to provide an apparatus and a method for diagnosing an abnormality of a bearing, whereby it is possible to detect an abnormality of a bearing early and to specify the abnormal section of the bearing.

An abnormality diagnosis apparatus for a bearing according to an embodiment of the invention is set out in claim 1. Further embodiments are set out in the dependent claims.

A method of diagnosing an abnormality of a bearing according to an embodiment of the invention is set out in claim 7.

Since the abnormality is diagnosed based on signals detected by the plurality of sensors, it is possible to detect the abnormality with high accuracy and to improve the reliability of the diagnosis result.

According to at least one embodiment of the present invention, since it is possible to detect an abnormality of the bearing early and to even specify the abnormality occurrence location or the abnormality occurrence position in the circumferential direction, it is possible to address the abnormality quickly and appropriately.

BRIEF DESCRIPTION OF DRAWINGS

FIG. 1 is an overall configuration diagram of a bearing and an abnormality-diagnosis apparatus.
FIG. 2 is a cross-sectional view of a roller bearing.

FIG. 3A is a diagram of an AE signal caused by a fatigue crack, illustrated as an example of an AE signal.

FIG. 3B is a diagram of an AE signal caused by slide contact, illustrated as an example of an AE signal.

FIG. 4 is a diagram for describing the parameters of a bearing.

FIG. 5 is an overall configuration diagram of a bearing and an abnormality-diagnosis apparatus according to an embodiment of the present invention.

FIG. 6 is a cross-sectional view of a roller bearing according to an embodiment of the invention.

FIG. 7 is a schematic diagram for describing an abnormality diagnosis method according to another embodiment.

FIG. 8 is a diagram of detection timings of electrical signals detected by respective electrical-signal detection parts illustrated in FIG. 7.

FIG. 9 is an overall configuration diagram of a bearing and an abnormal-diagnosis apparatus according to yet another embodiment.

FIG. 10 is a schematic diagram of a wind turbine power generating apparatus according to one embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

An abnormality diagnosis apparatus 10 for a bearing 2 of the present embodiment is an apparatus for detecting an abnormality generated in the bearing 2 as well as obtaining information related to an abnormal section.

Here, information related to an abnormal section includes an abnormality occurrence location (such as a constituent member of the bearing 2) or an abnormality occurrence position in the circumferential direction of the bearing 2. Further, an abnormality of the bearing 2 in the present embodiment is, for instance, damage such as a crack produced on the bearing 2, or a break in oil film.

Further, the type of the bearing 2 that can be diagnosed by the present embodiment is not particularly limited. For instance, as the bearing 2 to which the present embodiment can be applied, slide bearings such as a sleeve bearing, or rolling bearings such as a ball bearing and a roller bearing can be mentioned. While a roller bearing is illustrated in the following description, the present embodiment is not limited thereto.

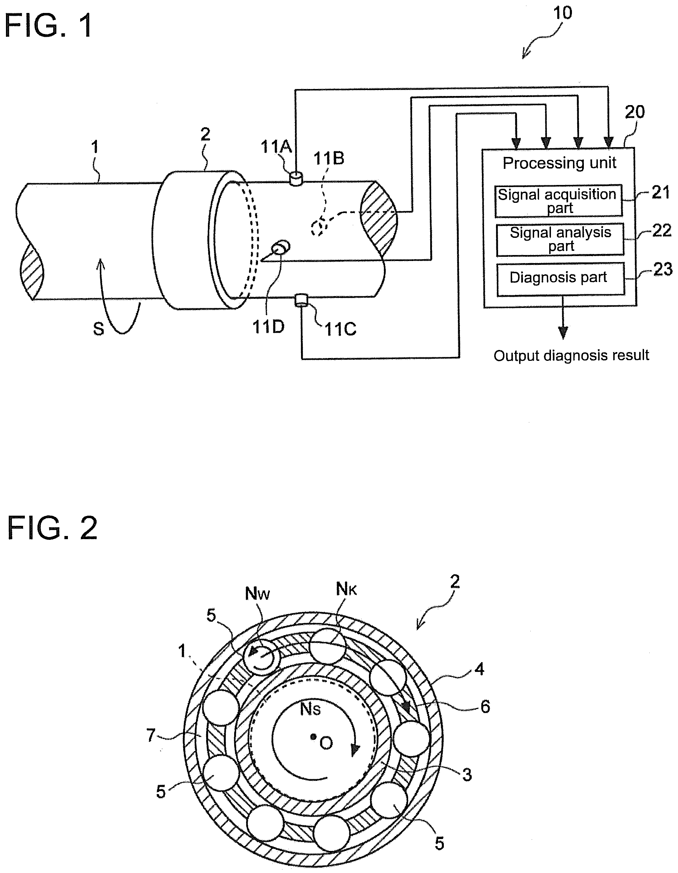

FIG. 1 is an overall configuration diagram of the bearing 2 and the abnormality-diagnosis apparatus 10 not according to an embodiment of the present invention. FIG. 2 is a cross-sectional view of the roller bearing not according to an embodiment of the present invention.

As illustrated in FIGs. 1 and 2, the bearing 2 supports the rotation shaft 1 rotatably.

The abnormality diagnosis apparatus 10 includes AE sensors 11 (11A to 11D) and a processing unit 20 having a diagnosis part 23. In FIG. 1, the rotational direction S indicates the rotational direction of the rotation shaft 1.

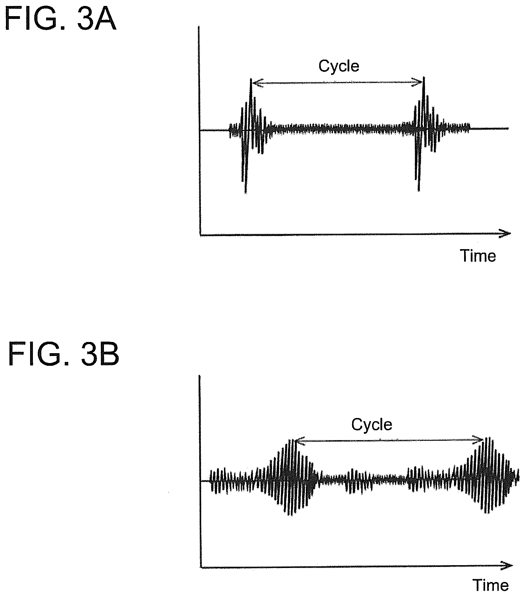

The AE sensors 11 (11A to 11D) are configured to detect AE signals from the bearing 2. Acoustic Emission (AE) signals are signals indicating a stress wave (elastic wave) generated from the bearing 2. Specifically, the AE signals are detected from contact between an abnormal section generated in the bearing 2 and another section due to rotation of the rotation shaft 1. FIGs. 3A and 3B each illustrate an example of an AE signal. FIG. 3A is a diagram of an AE signal caused by a fatigue crack, and FIG. 3B is a diagram of an AE signal caused by slide contact. As illustrated in the drawings, if there is an abnormality in the bearing 2, stress waves (AE signals) appear cyclically in the waveform detected by the AE sensors 11 (11A to 11D). It is possible to diagnose whether an abnormality such as damage has occurred to the bearing 2 by analyzing these AE signals.

In the example illustrated in FIG. 1, four AE sensors 11A to 11D are attached to the outer circumferential surface of the rotation shaft 1. The four AE sensors 11A to 11D are disposed at different positions from one another in the circumferential direction of the bearing 2. The four AE sensors 11A to 11D may be disposed at regular intervals in the circumferential direction of the bearing 2. In the exemplary arrangement illustrated in the drawing, the four AE sensors 11A to 11D are disposed at intervals of 90 degrees in the circumferential direction.

Here, the number of AE sensors 11 (11A to 11D) is not limited to four, and the number may be one, or two or more. In a case where a plurality of AE sensors 11 (11A to 11D) is provided, it is possible to detect an abnormality of the bearing 2 with high accuracy, which makes it possible to improve the reliability of an abnormality diagnosis result.

Further, while the AE sensors 11 (11A to 11D) are attached to the outer circumferential surface of the rotation shaft 1 in the example illustrated in FIG. 1, the AE sensors 11 (11A to 11D) may be attached to the bearing 2, or to other members attached to the rotation shaft 1 so as to contact the rotation shaft 1, which are members to which the AE signals propagate.

In one embodiment, the processing unit 20 includes a signal-acquisition part 21, a signal-analysis part 22, and a diagnosis part 23.

The signal-acquisition part 21 is configured to obtain the AE signals detected by the AE sensors 11 (11A to 11D).

The signal-analysis part 22 is configured to analyze the AE signals obtained by the signal-acquisition part 21. The signal-analysis part 22 may be configured to obtain the detection frequency of the AE signals.

The diagnosis part 23 is configured to specify the abnormal location of the bearing 2 based on the detection frequency of the AE signals obtained by the signal analysis part 22.

Here, the diagnosis part 23 may include the signal-acquisition part 21 or the signal analysis part 22.

When an abnormality (e.g. damage) has occurred to the bearing 2, there is a correlation between the abnormal location and the detection frequency of the AE signals that are generated from contact between the bearing 2 and the rotation shaft 1 at the abnormal location. In view of this, the above abnormal diagnosis apparatus 10 detects the AE signals from the bearing 2 with the AE sensors 11 (11A to 11D) and specifies the abnormal location of the bearing 2 based on the detection frequency of the AE signals. In this way, it is possible to detect the abnormality of the bearing 2 early and to even specify the abnormal location, which makes it possible to address the abnormality quickly and appropriately.

As illustrated in FIG. 2, in a case where the bearing 2 is a roller bearing, the bearing 2 includes an inner race (the first slewing ring) 3 configured to be rotatable with the rotation shaft 1, an outer race (the second slewing ring) 4 disposed radially outside the inner race 3, and a plurality of rolling elements 5 disposed between the inner race 3 and the outer race 4.

The rotation shaft 1 is disposed inside the inner race 3.

A lubricant-oil film 7 is formed between the inner race 3 and the outer race 4. Here, in the present embodiment, the lubricant oil includes liquid lubricant oil, a semisolid grease or the like, and generally refers to one used to reduce friction between constituent members.

The plurality of rolling elements 5 is arranged at regular intervals in the circumferential direction of the bearing 2. Each rolling element 5 may be a ball, or a roller having a column shape or a conical shape.

Further, the bearing 2 may include a retainer 6 disposed between the inner race 3 and the outer race 4 and configured to keep the intervals between the rolling elements constant. The retainer 6 enables the plurality of rolling elements 5 to revolve about the rotational axis O of the rotation shaft 1 uniformly and to rotate individually.

Here, while the roller bearing illustrated in FIG. 2 is configured such that the inner race 3 is rotatable with the rotation shaft 1, the roller bearing may be configured such that the outer race (the first slewing ring) is rotatable with the rotation shaft in another configuration example. In this case, the inner race (the second slewing ring) is disposed innermost, the outer race (the first slewing ring) being disposed radially outside the inner race and the rotation shaft being disposed radially outside the outer race.

In a case where the abnormality diagnosis is performed on the roller bearing 2 having the above configuration, the diagnosis part 23 may be configured to specify the abnormal location from among the inner race 3, the outer race 4 and the rolling elements 5 based on the detection frequency of the AE signals.

In a case where the roller bearing 2 includes the inner race 3, the outer race 4 and the rolling elements 5, the AE signal detected when an abnormality has occurred to the inner race 3, the AE signal detected when an abnormality has occurred to the outer race 4, and the AE signal detected when an abnormality has occurred to one of the rolling elements 5 each have a unique periodicity. In view of this, the abnormal location is specified from among the inner race 3, the outer race 4 and the rolling elements 5 based on the detection frequency of the AE signals. In this way, it is possible to determine the abnormal location from the AE signals appropriately, which makes it possible to take a countermeasure suitable to the abnormal location at an early stage.

Now, the specific configuration of the diagnosis part 23 corresponding to the abnormal occurrence location of the bearing 2 will be described.

With reference to FIGs. 1 and 2, the diagnosis part 23 is configured to determine that the inner race 3 is the abnormal location if the detection frequency corresponds to a frequency represented by a product of N and a sum or a difference of $N_S$ and $N_K$, where $N_S$ is the rotation speed of the rotation shaft 1, $N_K$ is the revolution speed of the plurality of rolling elements 5, and N is the number of rolling elements 5.

When the inner race 3 is the abnormal location, it may be determined that the inner race 3 is the abnormal location if the detection frequency corresponds to a frequency represented by the following equation (1).

$$\text{Frequency} = (\text{the rotation speed } N_S \text{ of the rotation shaft} \pm \text{the revolution speed } N_K \text{ of the plurality of rolling elements}) \times \text{the number } N \text{ of rolling elements} \quad (1)$$

When the rotation shaft 1 rotates, the inner race 3 rotating with the rotation shaft 1 contacts the rotation shaft 1 and the rolling elements 5. When an abnormality has occurred to the inner race 3, the abnormal location of the inner race 3 contacts other members due to the revolution of the rolling elements 5, and the shock at this time appears in the AE signals. In other words, when an abnormality has occurred to the inner race 3, AE signals indicating an abnormality appear in cycles that correspond to the rotation of the rotation shaft 1 and the revolution of the rolling elements 5. Thus, with the above configuration, it is possible to detect an abnormality of the inner race 3 appropriately from the AE signals by determining that the inner race 3 is the abnormal location if the detection frequency corresponds to a frequency represented by a product of N (the number of rolling elements) and a sum or a difference of $N_S$ (the rotation speed of the rotation shaft) and $N_K$ (the revolution speed of the plurality of rolling elements).

Further, the diagnosis part 23 is configured to determine that the outer race 4 is the abnormal location if the detection frequency corresponds to a frequency represented by a product of N and $N_K$, where $N_K$ is the revolution speed of the plurality of rolling elements 5 and N is the number of rolling elements 5.

When the outer race 4 is the abnormal location, it may be determined that the outer race 4 is the abnormal location if the detection frequency corresponds to the frequency represented by the following equation (2).

$$\text{Frequency}$$

$$= \text{the revolution speed } N_K \text{ of the rolling elements} \times \text{the number N of rolling elements}$$

$$(2)$$

When the rotation shaft 1 rotates, the outer race 4 disposed radially outside the inner race 3 via the rolling elements 5 contacts the rolling elements 5. When an abnormality has occurred to the outer race 4, the abnormal location of the outer race 4 contacts other members due to the revolution of the plurality of rolling elements 5, and the shock at this time appears in the AE signals. In other words, when an abnormality has occurred to the outer race 4, AE signals indicating an abnormality appear in cycles that correspond to the revolution of the plurality of rolling elements 5. Thus, with the above configuration, it is possible to detect an abnormality of the outer race 4 appropriately from the AE signals by determining that the outer race 4 is the abnormal location if the detection frequency corresponds to a frequency represented by a product of N (the number of rolling elements) and $N_K$ (the revolution speed of the plurality of rolling elements).

Further, the diagnosis part 23 is configured to determine that one of the rolling elements 5 is the abnormal location when the detection frequency corresponds to a frequency represented by $N_W$, where $N_W$ is the rotation speed of each rolling element 5.

When the rotation shaft 1 rotates, the rolling elements 5 contact the inner race 3 and the outer race 4 while rotating. When an abnormality has occurred to one of the rolling elements 5, the abnormal location of the rolling element 5 contacts other members due to the rotation of the rolling elements 5, and the shock at this time appears in the AE signals. In other words, when an abnormality has occurred to one of the rolling elements 5, AE signals indicating an abnormality appear in cycles that correspond to the rotation of the rolling elements 5. Thus, with the above configuration, it is possible to detect an abnormality of the rolling elements 5 appropriately from the AE signals by determining that one of the rolling elements 5 is the abnormal location if the detection frequency corresponds to a frequency represented by $N_W$ (the rotation speed of the rolling elements).

In the above equations (1) and (2), the revolution speed $N_K$ and the rotation speed $N_W$ are defined as follows.

$$\text{Revolution speed } N_K = 0.5 \times (1 \pm D_{w\cos\alpha} / D_{pw}) \times n \text{ [rpm]}$$

$$\text{Rotation speed } N_W = \pm 0.5 \times (D_{pw} / D_w - D_w / D_{pw}\cos 2\alpha) \times n \text{ [rpm]}$$

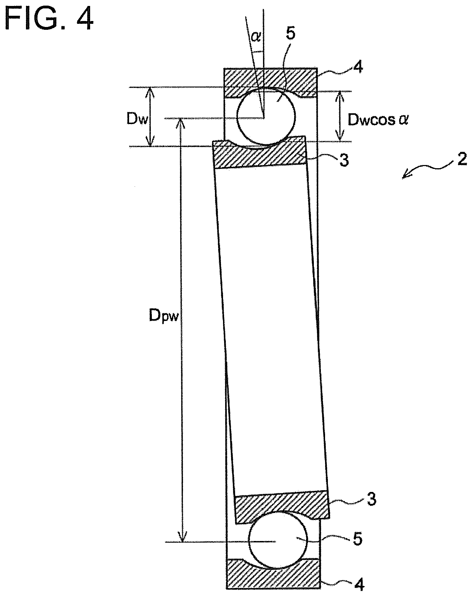

Here, with reference to FIG. 4, $D_{pw}$ is the pitch diameter of the plurality of rolling elements, $D_w$ is the diameter of each rolling element, $\alpha$ is the contact angle of the rolling elements and the inner or outer race, and n is the rotation speed of the shaft [rpm]. The above equations (1) and (2) are applied to a case where only one of the inner race 3 or the outer race 4 is rotatable. The sign is minus (-) if only the inner race 3 is rotating, and the sign is plus (+) if only the outer race 4 is rotating.

Referring again to FIGs. 1 and 2, in one embodiment, the diagnosis part 23 is configured to specify the abnormality occurrence position of the bearing 2 in the circumferential direction based on a difference in the detection timings of the plurality of AE signals detected by the respective AE sensors 11 (11A to 11D). Here, the specific configuration for specifying the abnormality occurrence position of the bearing 2 in the circumferential direction will be described in detail with reference to another embodiment described below.

With the above configuration, a plurality of AE sensors 11 (11A to 11D) is disposed at different positions from one another in the circumferential direction of the bearing 2, and each AE sensor 11 (11A to 11D) is configured to detect the AE signals generated at the abnormal location. The distance between the abnormal location and each AE sensor 11 (11A to 11D) is varied from one another, and thus there is a difference in the detection timings of the AE signals among the respective AE sensors 11 (11A to 11D). Thus, it is possible to specify the abnormality occurrence position of the bearing 2 in the circumferential direction appropriately, based on the difference in the detection timings of the plurality of AE signals. As described above, since it is possible to specify the abnormality occurrence position of the bearing 2 in the circumferential direction in addition to specifying the abnormal occurrence location using the detection frequency of the AE signals, it is possible to determine the abnormal section more particularly.

In one embodiment not according to the present invention, the method of diagnosing an abnormality of the bearing 2 includes an AE-signal detection step and a diagnosis step.

In the AE-signal detection step, at least one AE sensor 11 (11A to 11D) is used to detect the AE signals from the bearing 2.

In the diagnosis step, the abnormal location of the bearing 2 is specified based on the detection frequency of the AE signals detected in the AE-signal detection step.

According to the above method, the AE signals from the bearing 2 are detected by the AE sensors 11 (11A to 11D), and the abnormal location of the bearing 2 is specified based on the detection frequency of the AE signals. In this way, it is possible to detect an abnormality of the bearing 2 early and even to specify the abnormal location, which makes it possible to address the abnormality quickly and appropriately.

In a case where the bearing 2, which is the target of the diagnosis, is a roller bearing illustrated in FIG. 2, the abnormal location may be specified from among the inner race 3, the outer race 4 and the rolling elements 5 based on the detection frequency in the diagnosis step.

In this way, it is possible to determine the abnormal location from the AE signals appropriately, and to take a countermeasure suitable to the abnormal location at an early stage.

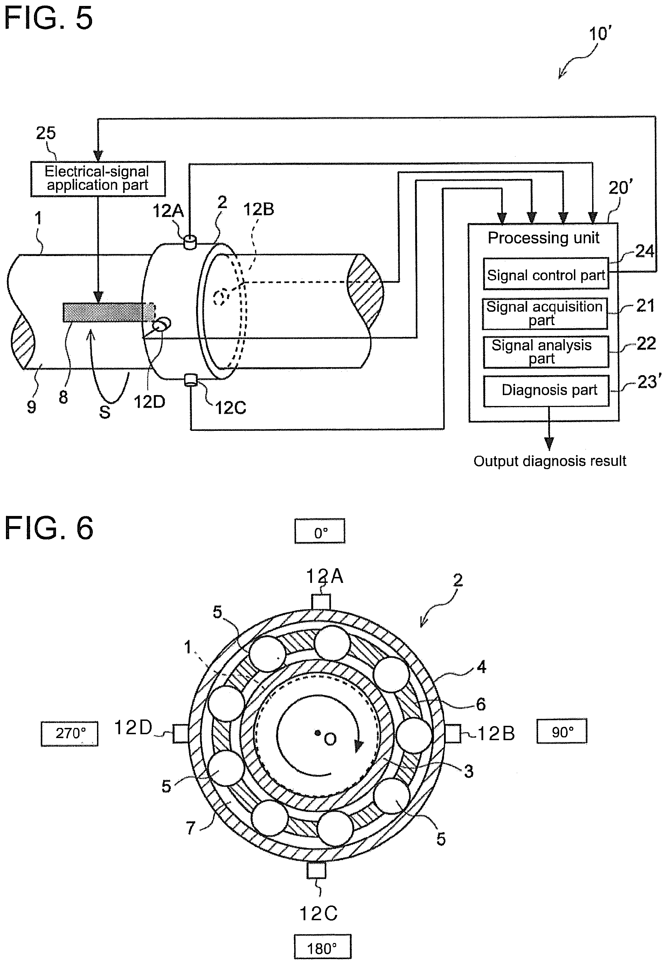

Next, with reference to FIGs. 5 and 6, the abnormality diagnosis apparatus 10 for the bearing 2 according to an embodiment of the present invention will be described. FIG. 5 is an overall configuration diagram of a bearing 2 and an abnormality-diagnosis apparatus 10.

FIG. 6 is a cross-sectional view of a roller bearing 2.

As illustrated in FIGs. 5 and 6, the abnormality diagnosis apparatus 10' includes a plurality of sensors 12 (12A to 12D) and a processing unit 20' having a diagnosis part 23'.

The sensors 12A (12A to 12D) are disposed at different positions from one another in the circumferential direction of the bearing 2, and configured to detect signals which indicate an abnormality of the bearing 2. The signals indicating an abnormality of the bearing 2 are electrical signals which indicate the conduction state.

In one embodiment, the processing unit 20' includes the signal-acquisition part 21, the signal-analysis part 22, and a diagnosis part 23'.

The signal-acquisition part 21 is configured to obtain the abnormality signals detected by the sensors 12 (12A to 12D). The abnormality signals are signals which indicate an abnormality of the bearing 2.

The signal-analysis part 22 is configured to analyze the abnormality signals obtained by the signal-acquisition part 21. The signal-analysis part 22 may be configured to obtain the detection timings of the abnormal signals obtained by the signal-acquisition part 21.

The diagnosis part 23' is configured to specify the abnormal occurrence position of the bearing 2 in the circumferential direction based on the detection timings of the abnormality signals obtained by the respective sensors (12A to 12D).

Here, the diagnosis part 23' may include the signal-acquisition part 21 or the signal analysis part 22.

With the above configuration, the plurality of sensors 12 (12A to 12D) is disposed at different positions from one another in the circumferential direction of the bearing 2, and each sensor 12 (12A to 12D) is configured to detect the abnormality signals of the bearing 2. The distance between the abnormal location of the bearing 2 and each sensor 12 (12A to 12D) is varied from one another, and thus there is a difference in the detection timings of the abnormality signals detected by the respective sensors 12 (12A to 12D). Thus, it is possible to specify the abnormality occurrence position of the bearing 2 in the circumferential direction appropriately, based on the difference in the detection timings of the plurality of abnormality signals. In this way, since it is possible to detect an abnormality of the bearing 2 early and to even specify the abnormality occurrence position, it is possible to address the abnormality quickly and appropriately.

Further, since the abnormality is diagnosed based on signals detected by the plurality of sensors 12 (12A to 12D), it is possible to detect the abnormality accurately and to improve the reliability of the diagnosis result.

As illustrated in FIG. 6, in a case where the bearing 2 is a roller bearing, the bearing 2 includes an inner race (the first slewing ring) 3 configured to be rotatable with the rotation shaft 1, an outer race (the second slewing ring) 4 disposed radially outside the inner race 3, and a plurality of rolling elements 5 disposed between the inner race 3 and the outer race 4.

The rotation shaft 1 is disposed inside the inner race 3.

A lubricant-oil film 7 is formed between the inner race 3 and the outer race 4.

The plurality of rolling elements 5 is arranged at regular intervals in the circumferential direction of the bearing 2. Each rolling element 5 may be a ball, or a roller having a column shape or a conical shape.

Further, the bearing 2 may include a retainer 6 disposed between the inner race 3 and the outer race 4 and configured to keep the intervals between the rolling elements 5 constant. The retainer 6 enables the plurality of rolling elements 5 to revolute about the rotational axis O of the rotation shaft 1 uniformly and to rotate individually.

Here, while the roller bearing illustrated in FIG. 6 is configured such that the inner race 3 is rotatable with the rotation shaft 1, the roller bearing may be configured such that the outer race (the first slewing ring) is rotatable with the rotation shaft in another configuration example. In this case, the inner race (the second slewing ring) is disposed innermost, the outer race (the first slewing ring) being disposed radially outside the inner race and the rotation shaft being disposed radially outside the outer race.

With reference to FIGs. 5 and 6, in a case where an abnormality of the roller bearing 2 having the above configuration is diagnosed, the abnormality diagnosis apparatus 10' further includes an electrical-signal application part 25 for applying electrical signals to one of the outer race 4 or a rotary part which includes the rotation shaft 1 and the inner race 3.

In the example illustrated in FIG. 5, an electrically conductive part 8 is provided so as to extend from the outer circumferential surface of the rotation shaft 1 to the inner circumferential surface of the inner race 3, and the electrical-signal application part 25 is configured to apply electrical signals (for instance, pulse signals) to the electrically conductive part 8. A region of the outer circumferential surface of the rotation shaft 1 around the electrically conductive part 8 may be formed by an insulating part 9. In this way, it is possible to prevent the electrical signals applied by the electrical-signal application part 25 from flowing to sections other than the inner race 3 unintentionally. Here, the processing unit 20' may further include a signal control part 24 for controlling the electrical-signal application part 25.

The plurality of sensors 12 (12A to 12D) includes a plurality of electrical-signal detection parts disposed on the other one of the outer race 4 or the rotary part including the rotation shaft 1 and the inner race, at positions different from one another in the circumferential direction of the bearing 2. The electrical-signal detection parts 12 (12A to 12D) may be arranged at regular intervals in the circumferential direction.

The diagnosis part 23' is configured to specify the abnormality occurrence position in the circumferential direction based on the difference in the detection timings of the electrical signals among the plurality of electrical-signal detection parts.

An oil film 7 is normally formed between the first slewing ring and the second slewing ring of the roller bearing 2. To operate the roller bearing smoothly, it is desirable that the oil film is formed in the circumferential direction of the bearing without a break. If there is a break in the oil film due to a shortage of the lubricant oil, the bearing 2 may be eventually damaged.

In view of this, according to the above configuration, the abnormality diagnosis apparatus 10' includes the electrical-signal application part 25 for applying electrical signals to one of the outer race 4 or the rotary part including the rotation shaft 1 and the inner race 3, and the plurality of electrical-signal detection parts 12 (12A to 12D) disposed on the other one of the outer race 4 or the rotary part including the rotation shaft 1 and the inner race 3.

When there is no break in the oil film, the inner race 3 and the outer race 4 are electrically isolated by the oil film. However, if there is a break in the oil film, the inner race 3 and the outer race 4 electrically conduct to each other at the position where the break of oil film has occurred. At this time, since there are more than one electrical-signal detection parts disposed in the circumferential direction of the bearing, the distance between each electrical-signal detection part 12 (12A to 12D) and the conducting position of the inner race 3 and the outer race 4 is varied from one another, so that there is a difference in the detection timings of the abnormality signals detected by the respective electrical-signal detection parts 12 (12A to 12D).

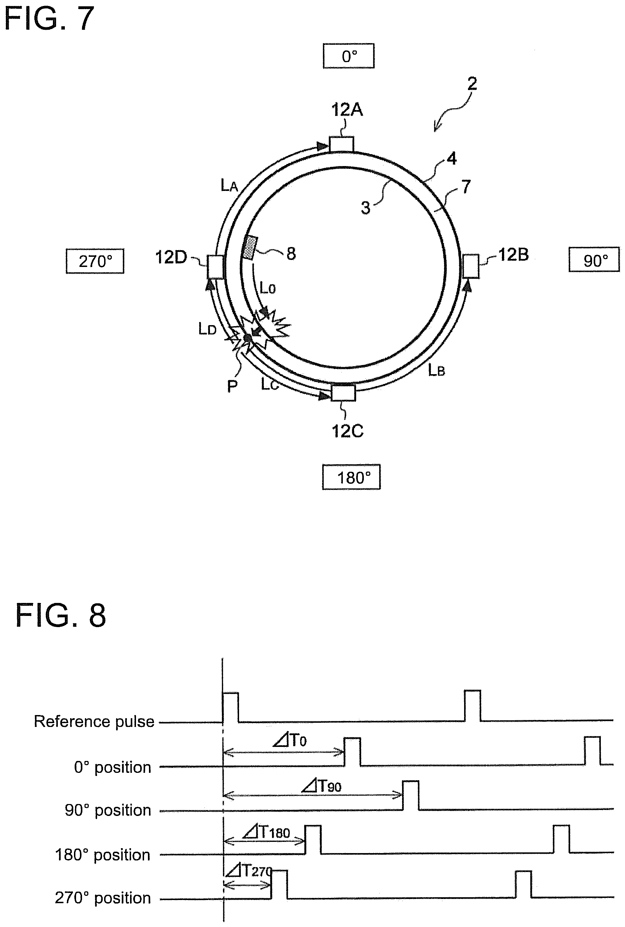

FIG. 7 is a schematic diagram for describing an abnormality diagnosis method according to another embodiment. FIG. 8 is a diagram of detection timings of electrical signals detected by respective electrical-signal detection parts 12 (12A to 12D) illustrated in FIG. 7.

In the example illustrated in FIG. 7, four electrical-signal detection parts 12 (12A to 12D) are disposed at intervals of 90 degrees (0, 90, 180, and 270 degrees) in the circumferential direction of the bearing 2. These electrical-signal detection parts 12 (12A to 12D) are attached to the outer circumferential surface of the outer race 4. On the other hand, the electrically conductive part 8 is disposed on the inner circumferential surface of the inner race 3. In the drawing, it is assumed that a break in the oil film has occurred at an abnormal section P located between the electrical-signal detection part 12C disposed at the 180-degree circumferential position and the electrical-signal detection part 12D disposed at the 270-degree circumferential position, the abnormal section P being closer to the electrical-signal detection part 12D than to the electrical-signal detection part 12C.

The electrical signals applied to the electrically conductive part 8 by the electrical-signal application part 25 flow to the outer race 4 from the inner race 3 through the abnormal section P. At this time, the electrical signals flow to the outer race 4, starting from the abnormal section P. Therefore, in the path of the electrical signals from the electrically conductive part 8 to each of the electrical-signal detection parts 12A to 12D, the distance L0 from the electrically conductive part 8 to the abnormal section P is the same but the distances $L_A$ to $L_D$ from the abnormal section P to the respective electrical-signal direction parts 12A to 12D are varied from one another. In accordance with the distances $L_A$ to $L_D$ from the abnormal section P to the respective electrical-signal direction parts 12A to 12D, a difference is caused in the detection timings of the electrical signals detected by the respective electrical-signal detection parts 12A to 12D.

As illustrated in FIG. 8, at the electrical-signal detection part 12D which is closest to the abnormal section P, the difference $\Delta T_{270}$ in the detection timings of the electrical signals from the reference pulse is the shortest. At the electrical-signal detection part 12C which is second closest to the abnormal section P, the difference $\Delta T_{180}$ in the detection timings of the electrical signals from the reference pulse is the second shortest. At the electrical-signal detection part 12A which is third closest to the abnormal section P, the difference $\Delta T_0$ in the detection timings of the electrical signals from the reference pulse is the third shortest. At the electrical-signal detection part 12B which is farthest from the abnormal section P, the difference $\Delta T_{90}$ in the detection timings of the electrical signals from the reference pulse is the longest. Here, the reference pulse may be the waveform of the electrical signals applied to the electrically conductive part 8 from the electrical-signal application part 25.

As described above, it is possible to specify the abnormality occurrence position of the bearing 2 in the circumferential direction appropriately, based on the difference in the detection timings of the electrical signals among the electrical-signal detection parts 12 (12A to 12D).

In this way, it is possible to detect an abnormality of the bearing 2 early and to even specify the abnormality occurrence position, which makes it possible to address the abnormality quickly and appropriately.

While the electrical-signal application part 25 applies electrical signals to the outer circumferential surface of the rotation shaft 1 and the inner race 3 in the example illustrated in FIGs. 5 to 7, the electrical signals may be applied to the outer race 4. In this case, the electrical-signal detection parts 12 (12A to 12D) are attached to the inner race 3.

Further, in a case where the target of the abnormality diagnosis is a slide bearing (not illustrated) positioned radially outside the rotation shaft via a lubricant-oil film, the following configuration may be employed.

The electrical-signal application part is configured to apply electrical signals to one of the rotation shaft or the slide bearing.

The plurality of sensors includes a plurality of electrical-signal detection parts disposed on the other one of the rotation shaft or the slide bearing at positions varied from one another in the circumferential direction.

The diagnosis part is configured to specify the abnormality occurrence position in the circumferential direction based on a difference in the detection timings of the electrical signals among the plurality of electrical-signal detection parts.

There is normally an oil film formed between the slide bearing and the rotation shaft. To operate the slide bearing smoothly, it is desirable that the oil film is formed in the circumferential direction of the bearing without a break. If there is a break of oil film due to a shortage of lubricant oil, the bearing may be eventually damaged.

In view of this, according to the above configuration, the abnormality diagnosis apparatus includes the electrical-signal application part for applying electrical signals to one of the rotation shaft or the slide bearing, and the plurality of electrical-signal detection parts disposed on the other one of the rotation shaft or the slide bearing.

When there is no break of oil film, the rotation shaft and the slide bearing are electrically isolated by the oil film. However, if there is a break in the oil film, the rotation shaft and the slide bearing electrically conduct to each other at the position where the break in the oil film has occurred. At this time, since there are more than one electrical-signal detection parts disposed in the circumferential direction of the bearing, the distance between each electrical-signal detection part and the conducting position of the rotation shaft and the slide bearing is varied from one another, so that there is a difference in the detection timings of the abnormality signals detected by the respective electrical-signal detection parts. Thus, it is possible to specify the abnormality occurrence position of the bearing in the circumferential direction appropriately, based on a difference in the detection timings of the electrical signals among the electrical-signal detection parts.

In another embodiment, the method of diagnosing an abnormality of the bearing 2 includes a signal detection step and a diagnosis step.

In the signal detection step, the plurality of sensors 12 (12A to 12D) disposed at positions different from one another in the circumferential direction of the bearing 2 is used to detect a signal indicating an abnormality of the bearing 2.

In the diagnosis step, the abnormality occurrence position of the bearing 2 in the circumferential direction is specified based on a difference in the detection timings of the plurality of signals detected in the signal detection step.

According to the above method, it is possible to specify the abnormality occurrence position of the bearing 2 in the circumferential direction appropriately, based on the difference in the detection timings of the plurality of abnormality signals. In this way, it is possible to detect an abnormality of the bearing 2 early and to even specify the abnormality occurrence location, which makes it possible to address the abnormality quickly and appropriately.

Further, diagnosing an abnormality based on signals detected by more than one sensors 12 (12A to 12D) makes it possible to detect an abnormality with high accuracy and to improve the reliability of the diagnosis result.

As described above, according to the embodiments of the present invention, it is possible to detect an abnormality of the bearing 2 early and to even specify the abnormality occurrence location or the abnormality occurrence position in the circumferential direction, which makes it possible to address the abnormality of the bearing 2 quickly and appropriately.

Embodiments of the present invention were described in detail above, but the present invention is not limited thereto, and various amendments and combination of the above embodiments may be implemented.

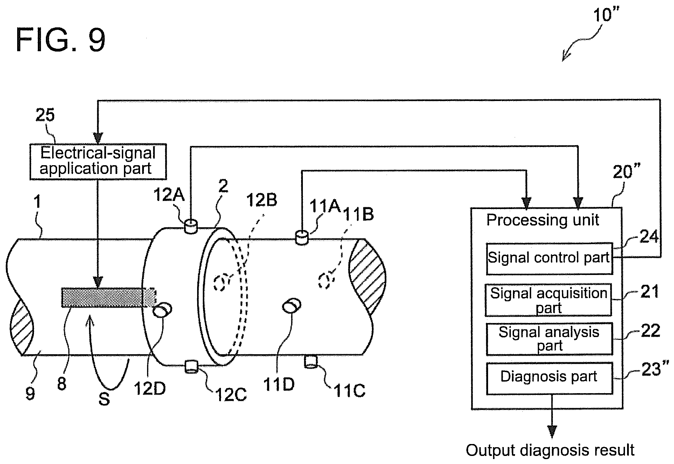

For instance, as illustrated in FIG. 9, the abnormality diagnosis apparatus 10 illustrated in FIG. 1 and the abnormality diagnosis apparatus 10' illustrated in FIG. 5 may be combined. Here, FIG. 9 is an overall configuration diagram of a bearing 2 and an abnormality diagnosis apparatus 10" according to another embodiment of the invention.

As illustrated in the drawing, the abnormality diagnosis apparatus 10" includes a plurality of AE sensors 11 (11A to 11D), a plurality of electrical-signal detection parts 12 (12A to 12D), a processing unit 20" including a diagnosis part 23", and an electrical-signal application part 25. Here, each section has the same configuration as that described above, and thus not described in detail.

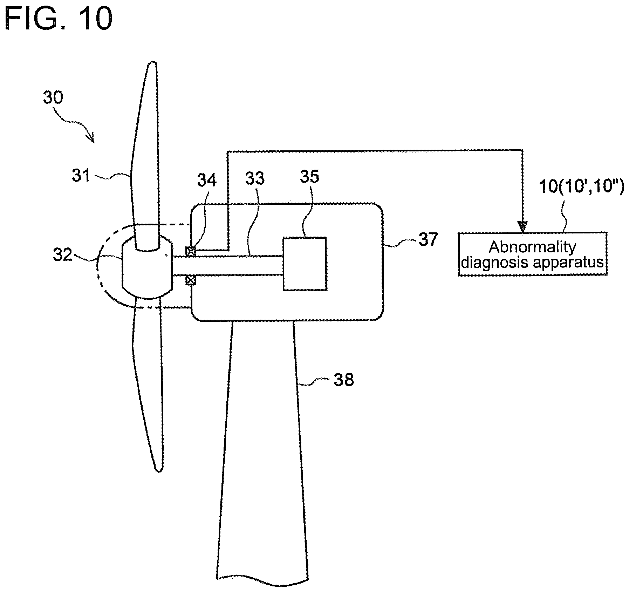

Further, the above abnormality diagnosis apparatuses 10, 10', 10''' may be used to diagnose an abnormality of a main bearing 34 of a wind turbine generator 30 illustrated in FIG. 10. In FIG. 10, the wind turbine generator 30 includes at least one blade 31, a hub 32 to which the blade 31 is mounted, a main shaft 33 configured to rotate with the blade 31 and the hub 32, and a main bearing 34 for rotatably supporting the main shaft 33. The main bearing 34 may be mounted to a nacelle 37 supported on an upper end of a tower 38 installed on the ocean or on the ground. The wind turbine generator 30 is configured so that the blade 31 receives wind and rotates with the main shaft 33, and the rotational energy is utilized to drive the generator 35.

The main bearing 34 of the wind turbine generator 30 is often relatively large. Thus, applying the above abnormality diagnosis apparatuses 10, 10', 10" to the main bearing 34 of the wind turbine generator 30 makes it possible to determine the abnormality occurrence location or the abnormality occurrence position in the circumferential direction easily, which makes it possible to improve efficiency of maintenance of the wind turbine generator 30.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. An abnormality diagnosis apparatus (10) for a bearing (2) which rotatably supports a rotation shaft, comprising:

   a plurality of sensors (12) for detecting signals which indicate an abnormality of the bearing (2), the plurality of sensors (12) being adapted to be disposed at positions varied from one another in a circumferential direction of the bearing (2),
   a diagnosis part (23) configured to specify an abnormality occurrence position of the bearing (2) in the circumferential direction, based on a difference in detection timings of the plurality of signals detected by the respective sensors (12); and
   an electrical-signal application part (25) for applying an electrical signal to one of the rotation shaft (1) and the bearing,

   wherein the plurality of sensors (12) comprises a plurality of electrical-signal detection parts (12) disposed on other one of the rotation shaft (1) or the slide bearing, at positions varied from one another in the circumferential direction, and
   wherein the diagnosis part (23) is configured to specify the abnormality occurrence position in the circumferential direction based on a difference in detection timings of the electrical signal among the plurality of electrical-signal detection parts (12).

2. The abnormality diagnosis apparatus (10) for a bearing (2) according to claim 1,
wherein the plurality of sensors (12) further comprises a plurality of Acoustic Emission sensors (11) for detecting Acoustic Emission signals from the bearing (2).

3. The abnormality diagnosis apparatus (10) for a bearing (2) according to claim 1 or 2, adapted to be connected to a bearing (2) that is a roller bearing including a first slewing ring (3) configured to be rotatable with the rotation shaft (1), a second slewing ring (4) disposed radially inside or outside the first slewing ring (3), and a plurality of rolling elements (5) disposed between the first slewing ring (3) and the second slewing ring (4),
wherein the electrical-signal application part (25) is configured to apply the electrical signal to one of the second slewing ring (4) or a rotary part which includes the rotation shaft (1) and the first slewing ring (3),
wherein the plurality of electrical-signal detection parts (12) is configured to be disposed on other one of the second slewing ring (4) or the rotary part including the rotation shaft (1) and the first slewing ring (3), at positions varied from one another in the circumferential direction.

4. The abnormality diagnosis apparatus (10) for a bearing (2) according to claim 1 or 2, adapted to be connected to a bearing (2) that is a slide bearing disposed radially outside the rotation shaft (1) via a lubricant-oil film,
wherein the electrical-signal application part (25) is configured to apply the electrical signal to one of the rotation shaft (1) or the slide bearing,
wherein the plurality of electrical-signal detection parts (12) is disposed on other one of the rotation shaft (1) or the slide bearing, at positions varied from one another in the circumferential direction.

5. The abnormality diagnosis apparatus (10) for a bearing (2) according to any one of claims 1 to 4,
wherein the plurality of sensors (12) is disposed at regular intervals in the circumferential direction.

6. The abnormality diagnosis apparatus (10) for a bearing (2) according to any one of claims 1 to 5, adapted to be connected to a bearing (2) that is a main bearing for rotatably supporting a main shaft (1) of a wind turbine generator.

7. A method of diagnosing an abnormality of a bearing (2) which rotatably supports a rotation shaft (1), the method comprising:

a signal detection step of detecting a plurality of signals which indicates an abnormality of the bearing (2), using a plurality of sensors disposed at positions varied from one another in a circumferential direction of the bearing (2);
a diagnosis step of specifying an abnormality occurrence position of the bearing (2) in the circumferential direction based on a difference in detection timings of the plurality of signals detected in the signal detection step; and
an electrical-signal application step of applying an electrical signal to one of the rotation shaft (1) and the bearing (2),

wherein the plurality of sensors comprises a plurality of electrical-signal detection parts (12) disposed on the other one of the rotation shaft (1) and the bearing (2), at various positions varied from one another in the circumferential direction,
wherein, in the diagnosis step, the abnormality occurrence position in the circumferential direction is specified based on a difference in detection timings of the electrical signal among the plurality of electrical-signal detection parts (12).

**Patentansprüche**

1. Anomaliediagnosevorrichtung (10) für ein Lager (2), das drehbar eine Drehwelle stützt, umfassend:

mehrere Sensoren (12) zum Detektieren von Signalen, die eine Anomalie des Lagers (2) anzeigen, wobei die mehreren Sensoren (12) dafür ausgelegt sind, an voneinander verschiedenen Positionen in einer Umfangsrichtung des Lagers (2) angeordnet zu werden,
einen Diagnoseteil (23), der dafür konfiguriert ist, eine Anomalieereignisposition des Lagers (2) in der Umfangsrichtung auf der Basis einer Differenz der Detektionszeiten der durch die jeweiligen Sensoren (12) detektierten mehreren Signale zu spezifizieren, und
einen Elektrisches-Signal-Anlegeteil (25) zum Anlegen eines elektrischen Signals an eines der Drehwelle (1) oder des Lagers,

wobei die mehreren Sensoren (12) mehrere Elektrisches-Signal-Detektionsteile (12) umfassen, die an dem anderen der Drehwelle (1) oder des Gleitlagers an voneinander verschiedenen Positionen in der Umfangsrichtung angeordnet sind, und
wobei der Diagnoseteil (23) dafür konfiguriert ist, die Anomalieereignisposition in der Umfangsrichtung auf der Basis einer Differenz der Detektionszeiten des elektrischen Signals unter den mehreren Elektrisches-Signal-Detektionsteilen (12) zu spezifizieren.

2. Anomaliediagnosevorrichtung (10) für ein Lager (2) nach Anspruch 1,
wobei die mehreren Sensoren (12) ferner mehrere Schallemissionssensoren (11) zum Detektieren von Schallemissionssignalen von dem Lager (2) umfassen.

3. Anomaliediagnosevorrichtung (10) für ein Lager (2) nach Anspruch 1 oder 2, die dafür ausgelegt ist, mit einem Lager (2) verbunden zu werden, das ein Wälzlager ist, das enthält: einen ersten Kugeldrehkranz (3), der dafür konfiguriert ist, sich mit der Drehwelle (1) drehen zu können, einen zweiten Kugeldrehkranz (4), der radial innerhalb oder außerhalb des ersten Kugeldrehkranzes (3) angeordnet ist, und mehrere Wälzelemente (5), die zwischen dem ersten Kugeldrehkranz (3) und dem zweiten Kugeldrehkranz (4) angeordnet sind,
wobei der Elektrisches-Signal-Anlegeteil (25) dafür konfiguriert ist, das elektrische Signal an einen des zweiten Kugeldrehkranzes (4) oder eines Rotationsteils anzulegen, das die Drehwelle (1) und den ersten Kugeldrehkranz (3) enthält,
wobei die mehreren Elektrisches-Signal-Detektionsteile (12) dafür konfiguriert sind, an einem anderen des zweiten Kugeldrehkranzes (4) oder des Rotationsteils, das die Drehwelle (1) und den ersten Kugeldrehkranz (3) enthält, an voneinander verschiedenen Positionen in der Umfangsrichtung angeordnet zu werden.

4. Anomaliediagnosevorrichtung (10) für ein Lager (2) nach Anspruch 1 oder 2, die dafür ausgelegt ist, mit einem Lager (2) verbunden zu werden, das ein Gleitlager ist, das radial außerhalb der Drehwelle (1) mit einem Schmierölfilm dazwischen angeordnet ist,
wobei der Elektrisches-Signal-Anlegeteil (25) dafür konfiguriert ist, das elektrische Signal an eines der Drehwelle (1) oder des Gleitlagers anzulegen,
wobei die mehreren Elektrisches-Signal-Detektionsteile (12) an dem anderen der Drehwelle (1) oder des Gleitlagers an voneinander verschiedenen Positionen in der Umfangsrichtung angeordnet sind.

5. Anomaliediagnosevorrichtung (10) für ein Lager (2) nach einem der Ansprüche 1 bis 4,
wobei die mehreren Sensoren (12) in regelmäßigen Intervallen in der Umfangsrichtung angeordnet sind.

6. Anomaliediagnosevorrichtung (10) für ein Lager (2) nach einem der Ansprüche 1 bis 5, die dafür ausgelegt ist, mit einem Lager (2) verbunden zu werden, das ein Hauptlager zum drehbaren Stützen einer Hauptwelle (1) eines Windturbinengenerators ist.

7. Verfahren zum Diagnostizieren einer Anomalie eines Lagers (2), das eine Drehwelle (1) drehbar stützt, wobei das Verfahren umfasst:

einen Signaldetektionsschritt zum Detektieren mehrerer Signale, die eine Anomalie des Lagers (2) anzeigen, unter Verwendung mehrerer Sensoren, die an voneinander verschiedenen Positionen in einer Umfangsrichtung des Lagers (2) angeordnet sind,
einen Diagnoseschritt zum Spezifizieren einer Anomalieereignisposition des Lagers (2) in der Umfangsrichtung auf der Basis einer Differenz der Detektionszeiten der in dem Signaldetektionsschritt detektierten mehreren Signale, und
einen Elektrisches-Signal-Anlegeschritt zum Anlegen eines elektrischen Signals an eines der Drehwelle (1) und des Lagers (2),

wobei die mehreren Sensoren mehrere Elektrisches-Signal-Detektionsteile (12) an dem anderen der Drehwelle (1) und des Lagers (2) an voneinander verschiedenen Positionen in einer Umfangsrichtung angeordnet sind,
wobei in dem Diagnoseschritt die Anomalieereignisposition in der Umfangsrichtung auf der Basis einer Differenz der Detektionszeiten des elektrischen Signals unter den mehreren Elektrisches-Signal-Detektionsteilen (12) spezifiziert wird.

**Revendications**

1. Appareil de diagnostic d'anomalie (10) pour un palier (2) qui supporte de façon rotative un arbre de rotation, comportant :

   une pluralité de capteurs (12) destinée à détecter des signaux qui indiquent une anomalie du palier (2), la pluralité de capteurs (12) étant prévue pour être disposée dans des positions qui varient l'une par rapport à l'autre dans une direction circonférentielle du palier (2),
   une partie de diagnostic (23) configurée pour spécifier une position d'apparition d'anomalie du palier (2) dans la direction circonférentielle, sur la base d'une différence dans des temps de détection de la pluralité de signaux détectés par les capteurs respectifs (12) ; et
   une partie d'application de signal électrique (25) destinée à appliquer un signal électrique sur l'un de l'arbre de rotation (1) et du palier,

   dans lequel la pluralité de capteurs (12) comporte une pluralité de parties de détection de signal électrique (12) disposées sur l'autre de l'arbre de rotation (1) ou du palier lisse, dans des positions qui varient l'une par rapport à l'autre dans la direction circonférentielle, et
   dans laquelle la partie de diagnostic (23) est configurée pour spécifier la position d'apparition d'anomalie dans la direction circonférentielle sur la base d'une différence dans des temps de détection du signal électrique parmi la pluralité de parties de détection de signal électrique (12).

2. Appareil de diagnostic d'anomalie (10) pour un palier (2) selon la revendication 1, dans lequel la pluralité de capteurs (12) comporte en outre une pluralité de capteurs d'émission acoustique (11) pour détecter des signaux d'émission acoustique du palier (2).

3. Appareil de diagnostic d'anomalie (10) pour un palier (2) selon la revendication 1 ou 2, prévu pour être relié à un palier (2) qui est un palier à rouleaux comprenant une première bague de pivotement (3) configurée pour pouvoir être entraînée en rotation avec l'arbre de rotation (1), une deuxième bague de pivotement (4) disposée radialement à l'intérieur ou à l'extérieur de la première bague de pivotement (3), et une pluralité d'éléments de roulement (5) disposés entre la première bague de pivotement (3) et la deuxième bague de pivotement (4),
   dans lequel la partie d'application de signal électrique (25) est configurée pour appliquer le signal électrique sur l'une de la deuxième bague de pivotement (4) ou d'une partie rotative qui comprend l'arbre de rotation (1) et la première bague de pivotement (3),
   dans lequel la pluralité de parties de détection de signal électrique (12) est configurée pour être disposée sur l'autre de la deuxième bague de pivotement (4) ou de la partie rotative comprenant l'arbre de rotation (1) et la première bague de pivotement (3), dans des positions qui varient l'une par rapport à l'autre dans la direction circonférentielle.

4. Appareil de diagnostic d'anomalie (10) pour un palier (2) selon la revendication 1 ou 2, prévu pour être connecté à un palier (2) qui est un palier lisse disposé radialement à l'extérieur de l'arbre de rotation (1) par l'intermédiaire d'un film d'huile de lubrification,
   dans lequel la partie d'application de signal électrique (25) est configurée pour appliquer le signal électrique sur l'un de l'arbre de rotation (1) ou du palier lisse,
   dans lequel la pluralité de parties de détection de signal électrique (12) est disposée sur l'autre de l'arbre de rotation (1) ou du palier lisse, dans des positions qui varient l'une par rapport à l'autre dans la direction circonférentielle.

5. Appareil de diagnostic d'anomalie (10) pour un palier (2) selon l'une quelconque des revendications 1 à 4, dans lequel la pluralité de capteurs (12) est disposée à des intervalles réguliers dans la direction circonférentielle.

6. Appareil de diagnostic d'anomalie (10) pour un palier (2) selon l'une quelconque des revendications 1 à 5, prévu pour être connecté à un palier (2) qui est un palier principal destiné à supporter de façon rotative un arbre principal (1) d'une éolienne.

7. Procédé de diagnostic d'une anomalie d'un palier (2) qui supporte de façon rotative un arbre de rotation (1), le procédé comportant :

   une étape de détection de signal destinée à détecter une pluralité de signaux qui indiquent une anomalie du palier (2), en utilisant une pluralité de capteurs disposés dans des positions qui varient l'une par rapport à l'autre dans une direction circonférentielle du palier (2) ;

une étape de diagnostic destinée à spécifier une position d'apparition d'anomalie du palier (2) dans la direction circonférentielle sur la base d'une différence dans des temps de détection de la pluralité de signaux détectés dans l'étape de détection de signal ; et

une étape d'application de signal électrique destinée à appliquer un signal électrique sur l'un de l'arbre de rotation (1) et du palier (2),

selon lequel la pluralité de capteurs comporte une pluralité de parties de détection de signal électrique (12) disposées sur l'autre de l'arbre de rotation (1) et du palier (2), dans différentes positions qui varient l'une par rapport à l'autre dans la direction circonférentielle,

selon lequel, dans l'étape de diagnostic, la position d'apparition d'anomalie dans la direction circonférentielle est spécifiée sur la base d'une différence dans des temps de détection du signal électrique parmi la pluralité de parties de détection de signal électrique (12).

FIG. 1

FIG. 2

FIG. 3A

FIG. 3B

FIG. 4

## FIG. 5

25 — Electrical-signal application part

1

12A  2  12B

9  8  S  12D  12C

10'

20'

Processing unit

24 — Signal control part

21 — Signal acquisition part

22 — Signal analysis part

23' — Diagnosis part

Output diagnosis result

## FIG. 6

0°

12A  2

5

1  4

6

270°  12D  O  12B  90°

5  3

7

5

12C

180°

## FIG. 7

## FIG. 8

# FIG. 9

10"

25

Electrical-signal
application part

20"

1    12A    2    12B    11A 11B

Processing unit

Signal control part    24

Signal acquisition
part    21

Signal analysis
part    22

Diagnosis part    23"

9    8    S    12D    12C    11D    11C

Output diagnosis result

FIG. 10

Abnormality diagnosis apparatus

**EP 3 054 292 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H819141 A

- JP 2003176830 A